# EUROPÄISCHE PATENTSCHRIFT

(11) **EP 3 127 683 B1**
(45) Veröffentlichungstag und Bekanntmachung des Hinweises auf die Patenterteilung: **22.04.2020**
(21) Anmeldenummer: 15180151.1
(22) Anmeldetag: 07.08.2015
(51) Int. Cl.: B29C 65/08, B65B 51/14, B65B 51/22, B65B 65/02, B65B 9/00

(54) **SCHWEISSSTATION ZUM VERSCHWEISSEN VON FOLIENBEUTELN UND VERFAHREN DAZU**
WELDING STATION FOR WELDING OF FILM BAGS AND METHOD FOR SAME
POSTE DE SOUDURE DESTINE A SOUDER DES SACHETS EN FILM ET PROCEDE ASSOCIE

(43) Veröffentlichungstag der Anmeldung: 08.02.2017
(73) Patentinhaber: INDAG Pouch Partners GmbH, 69214 Eppelheim (DE)
(72) Erfinder: Harth, Rolf, 69151 Neckargemünd (DE); Lechert, Frank, 69469 Weinheim (DE)
(74) Vertreter: Grünecker Patent- und Rechtsanwälte PartG mbB

(56) Entgegenhaltungen:
- EP-A1- 2 597 057
- US-A- 5 279 098

## Beschreibung

Die Erfindung betrifft eine Schweißstation zum Verschweißen von Folienbeuteln gemäß dem Oberbegriff des Anspruchs 1 und ein entsprechendes Verfahren gemäß Anspruch 7.

### Stand der Technik

Es sind Folienbeutelschweißvorrichtungen zum Verschweißen von gefüllten Folienbeuteln bekannt, die eine Haltevorrichtung und eine Schweißstation umfassen. Um die Schweißstation für einen Schweißprozess in den oberen Bereich der unter ihr mittels der Haltevorrichtung angeordneten Folienbeutel zu bringen, wird die Schweißstation mittels eines Gestänges mit einem Kniehebel und einer Druckluftfeder relativ zu der Haltevorrichtung bewegt. Der Anpressdruck der Schweißstation an die zu schweißenden Folienbeutelhälften ergibt sich ebenfalls mittels des Gestänges mit Kniehebel und Druckluftfeder. Die Druckluftfeder begrenzt hierbei im Totpunkt des Kniehebels die maximal auftretende Kraft des Anpressdrucks.

Durch die großen Massen von Gestänge, Kniehebel und Druckluftfeder, die bewegt werden müssen, ergibt sich eine Einschränkung in der Maschinengeschwindigkeit und somit der Anzahl der Folienbeutel, die pro Zeiteinheit verschweißt werden können, und auch in der Genauigkeit der Positionierung. Zudem kann der Anpressdruck nicht überprüft bzw. nicht genau gesteuert werden, was zu einem erhöhten Verschleiß der Haltevorrichtung und der Schweißstation führen kann. Auch können sich sehr lange Einstellzeiten der Gestänge nach Wartungsarbeiten an der Folienbeutelschweißvorrichtung ergeben. Zudem ist keine ausreichende Flexibilität in Bezug auf das Verschweißen verschiedener Folienbeuteltypen, z.B. mit unterschiedlichen Formaten, bei Verwendung einer solchen Folienbeutelschweißvorrichtung gegeben.

US 5,279,098 offenbart eine Vorrichtung und ein Verfahren zum Versiegeln für eine Maschine zum Formen, Füllen und Schließen von Packungen. Schlauchartig ausgebildetes Folienmaterial wird nach unten gezogen, um durch einen horizontalen Verschließer 210 zu einzelnen Beuteln gemacht zu werden. Der Verschließer 210 umfasst ein Paar querverlaufender Schließbacken 221, Dreheinrichtungen 211 zum Drehen der Schließbacken während sie zueinander immer in gleicher Richtung zeigen, Druckelemente 227 an den distalen Enden der Dreheinrichtungen 211 und Paare von linken und rechten beweglichen äußeren Rahmen 230 und entsprechenden inneren Rahmen 234, die so zusammengesetzt sind, dass die proximalen Endstücke der Dreheinrichtungen 211 aufeinander zu oder voneinander weg bewegt werden können. Jede der Dreheinrichtungen 211 umfasst rechte und linke Armteile 212 und eine Verbindungswelle 213.

Eine Schmidt-Kopplung 216 mit mehreren verbundenen Scheiben 216a, 216b, 216 c ist vorgesehen, um jeweils die Antriebskraft eines Servomotors von einer Antriebswelle 218 an eine Eingangswelle 215 der beiden Dreheinrichtungen 211 zu übertragen. Gegenseitig ineinandergreifende Zahnräder 219 sind an den Antriebswellen 218 für die beiden Dreheinrichtungen 211 vorgesehen, so dass diese in entgegengesetzte Richtungen rotieren.

EP 2 597 057 A1 offenbart eine Abfallverpackungsvorrichtung mit einer Fusionsdichtungsvorrichtung. Die Fusionsdichtungsvorrichtung umfasst zwei Schweißleisten 5 und eine Batterie mit einer maximalen Spannung von 20 V oder weniger, die den für den Schweißvorgang erforderlichen Strom liefert. Der Mechanismus wird durch eine manuelle Drehung einer Achse 1 aktiviert. Die Enden der freidrehbaren Achse 1 sind in einem Rahmen 6 stabilisiert und zwei Zahnräder 2 sind an jeder Seite der Achse 1 angeordnet. Die Zahnräder 2 der Achse greifen in Zahnräder 3, 4 von freidrehbaren Rahmen 7, 8, an denen die Schweißleisten 5 angeordnet sind. Durch das Ineinandergreifen der Zahnräder können die Schweißleisten 5 durch Drehung der Achse 1 in Kontakt gebracht bzw. wieder auseinander bewegt werden. Die Verschweißzeit wird durch einen Timer gesteuert.

### Aufgabe

Die Aufgabe der Erfindung besteht darin, eine Schweißstation zum Verschweißen von gefüllten Folienbeuteln und ein entsprechendes Verfahren zur Verfügung zu stellen, die einen erhöhten Durchsatz und einen verschleißfreieren Betrieb der Schweißstation ermöglichen.

### Lösung

Die Aufgabe wird gelöst durch die Schweißstation nach Anspruch 1 und das Verfahren nach Anspruch 7. Bevorzugte Ausführungsformen und Weiterbildungen sind in den abhängigen Ansprüchen offenbart.

Die Schweißstation in einer Folienbeutelabfüllvorrichtung zum Verschweißen von Folienbeuteln nach einem Füllprozess umfasst einen ersten und einen zweiten Schweißarm zum Verschweißen mehrerer gefüllter, nebeneinander angeordneter Folienbeutel, wobei der erste Schweißarm mit einer ersten Antriebswelle und der zweite Schweißarm mit einer zweiten Antriebswelle bewegbar sind. Ein Servomotor ist an der ersten Antriebswelle angeordnet, und eine Antriebsbewegung der ersten Antriebswelle wird von einem ersten Zahnrad an ein in das erste Zahnrad greifendes zweites Zahnrad und von dem zweiten Zahnrad an die zweite Antriebswelle übertragen. Die beiden Schweißarme können in einem geschlossenen Zustand zudem dazu ausgelegt sein, die gefüllten Folienbeutel für und/oder während des Schweißprozesses zu halten.

Durch die Verwendung eines direkt an einer Antriebswelle angeordneten Servomotors entfallen die im Stand der Technik benötigten Gestänge, die Druckluftfeder und der Kniehebel. Somit besitzt die erfindungsgemäße Schweißstation im Vergleich zu einer Schweißstation des Stands der Technik eine geringere Masse, so dass eine höhere Betriebsgeschwindigkeit möglich ist. Zudem entfallen lange Einstellzeiten nach einer Wartung der Schweißstation.

Durch die Anordnung des Servomotors an der ersten Antriebswelle, ist eine direkte Einwirkung des Servomotors auf diese Antriebswelle möglich, wodurch eine Genauigkeit in der Positionierung der Schweißarme gewährleistet wird. So können Verschleißerscheinungen der Schweißarme und Beschädigungen der Folienbeutel im zu verschweißenden Bereich minimiert werden, da beispielsweise der Anpressdruck der beiden Schweißarme an Typen der Folienbeutel und/oder den Zeitpunkt während des Schweißprozesses anpassbar ist.

Bei den Folienbeuteln kann es sich jeweils um einen Beutel handeln, der in einem oberen Bereich offen ist, d.h., dass die beiden Folienhälften des Folienbeutels in diesem oberen Bereich keinen festen, verbindenden Kontakt aufweisen. Dieser obere Bereich kann nach dem Füllen des Folienbeutels mit einem Füllprodukt, z.B. mit einem flüssigen oder stückigen Lebensmittel oder einem flüssigen oder stückigen Futtermittel, mittels der Schweißstation verschweißt werden, so dass ein fester, verbindender Kontakt zwischen den beiden Hälften des Folienbeutels ausgebildet wird.

Durch den Zahnradantrieb mit den beiden ineinandergreifenden Zahnrädern wird die Antriebsbewegung der ersten Antriebswelle an das erste Zahnrad und von dort an das zweite Zahnrad und somit an die zweite Antriebswelle übertragen. Da die erste Antriebswelle für eine Antriebsbewegung des ersten Schweißarms und die zweite Antriebswelle für eine Antriebsbewegung des zweiten Schweißarms zuständig ist, erfolgt immer eine synchrone Bewegung der beiden Schweißarme während des Öffnens bzw. Schließens. Aufgrund dieser Anordnung der Schweißarme und des beschriebenen Antriebs ist es somit möglich, eine rotativ-parallele Bewegung auszuführen, wodurch die gewünschte präzise Ausführung der Bewegung und eine Steuerung des Anpressdrucks der beiden Schweißarme gewährleistet werden können.

Die Schweißarme umfassen Schweißleisten, wobei die Schweißleisten vorzugsweise zum Ultraschallschweißen ausgelegt sind. Das Schweißen mit Ultraschall ermöglicht einen vergleichsweise schnellen Schweißprozess.

Zudem können die Schweißarme dazu ausgelegt sein, in einem geschlossenen Zustand einen Anpressdruck auszuüben. Die Stärke des Anpressdrucks kann veränderbar sein, so dass neben einem Halten von Folienbeuteln, zudem während des Schweißprozesses auch einer Materialdickenabnahme im Bereich der Schweißstelle Rechnung getragen werden kann.

Die Schweißstation kann weiter eine Mess- und Steuervorrichtung für einen Strom des Servomotors umfassen. Die Mess- und Steuervorrichtung ermöglicht ein Messen des Stroms, der in dem Servomotor fließt und/oder ein Steuern des Stroms, so dass es möglich ist, den Strom während eines Schweißprozesses, davor oder danach zu verändern, d.h. zu steuern.

Die Mess- und Steuervorrichtung kann dazu ausgelegt sein, den Anpressdruck der Schweißarme basierend auf Typangaben der Folienbeutel, wie Folienbeutelformaten, Füllvolumen und/oder Folienbeutelmaterialien, mittels des Stroms des Servomotors zu steuern. Dazu kann ein solcher Strom basierend auf den Typangaben berechnet werden. Der berechnete Sollstrom entspricht einem gewünschten Anpressdruck, der durch die Schweißarme ausgeübt werden soll. Die Typangaben der Folienbeutel können in die Mess- und Steuervorrichtung eingegeben und/oder aus einem Datenspeicher eingelesen werden. Der Datenspeicher kann ein Teil der Mess- und Steuervorrichtung sein oder der Datenspeicher kann ein davon unabhängiger Speicher sein.

Es kann vorteilhaft sein, den Anpressdruck zu erhöhen, wenn Folienbeutel verschweißt werden sollen, deren Folienbeutelmaterial beispielsweise eine größere Dicke als zuvor verschweißte Folienbeutel aufweist oder deren Größe, d.h. das Format, größer ist als zuvor verschweißte Folienbeutel. Entsprechend kann es vorteilhaft sein, den Anpressdruck zu verringern, wenn Folienbeutel verschweißt werden sollen, deren Folienbeutelmaterial beispielsweise eine kleinere Dicke als zuvor verschweißte Folienbeutel aufweist oder deren Größe, d.h. das Format, kleiner ist als bei zuvor verschweißten Folienbeuteln.

Die Schweißstation kann weiter eine Folienbeuteltransportvorrichtung umfassen. Mit der Folienbeuteltransportvorrichtung können die gefüllten Folienbeutel der Schweißstation für einen Schweißprozess zugeführt werden bzw. nach erfolgtem Verschweißen können die verschweißten Folienbeutel mit der Folienbeuteltransportvorrichtung weiteren Prozessen zugeführt werden.

Ein erfindungsgemäßes Verfahren zum Verschweißen von Folienbeuteln nach einem Füllprozess mit einer Schweißstation wie oben oder weiter unten beschrieben, umfasst die Schritte: Positionieren der gefüllten Folienbeutel unterhalb der Schweißstation; Schließen der Schweißarme und Ausüben eines Anpressdrucks mit einem ersten Wert und Verschweißen der gefüllten Folienbeutel. Während des Verschweißens kann der Anpressdruck auf einen zweiten Wert erhöht werden.

Nach dem Schritt des Verschweißens können ein Öffnen der Schweißarme und danach ein Entfernen der verschweißten Folienbeutel erfolgen, um diese für weitere Prozesse zu verwenden.

Das Verfahren kann die weiteren Schritte umfassen: Eingeben von Typangaben der Folienbeutel und/oder Einlesen von Typangaben der Folienbeutel aus einem Datenspeicher; Berechnen eines Sollstroms des Servomotors basierend auf den Typangaben mittels einer Mess- und Steuervorrichtung und Steuern des Servomotors entsprechend des berechneten Sollstroms.

Die beigefügten Figuren stellen beispielhaft zum besseren Verständnis und zur Veranschaulichung Aspekte der Erfindung dar. Es zeigt:
Figur 1 eine perspektivische Ansicht einer offenen Schweißstation in einer ersten Blickrichtung von schräg unten,
Figur 2 eine perspektivische Ansicht der geschlossenen Schweißstation in einer zweiten Blickrichtung von schräg unten und
Figur 3 ein Detail zur Bewegung der beiden Schweißarme.

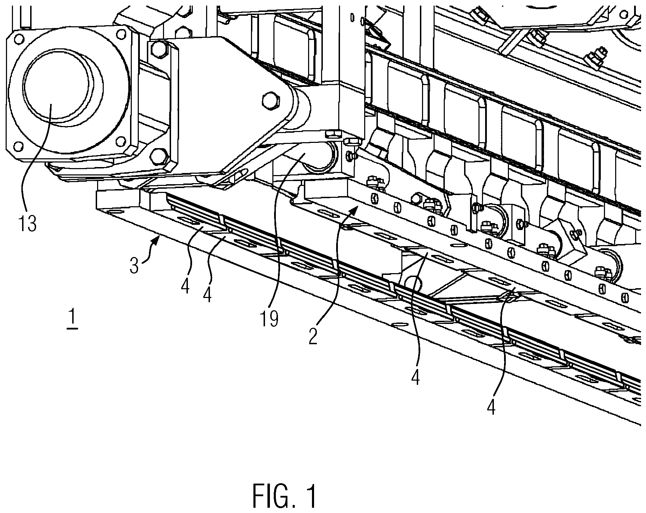

Figur 1 zeigt eine perspektivische Ansicht einer offenen Schweißstation 1 in einer ersten Blickrichtung von schräg unterhalb der Schweißstation 1, so dass die Seite der Schweißstation 1 mit dem Servomotor 13 zu sehen ist. Die Schweißstation 1 umfasst zwei relativ zueinander bewegbare Schweißarme 2, 3. Die Schweißarme 2, 3 sind spiegelsymmetrisch und weisen in dem Bereich, in dem sie in Kontakt gebracht werden können, wenn sich keine Folienbeutel zwischen ihnen befinden, jeweils mehrere, nebeneinander entlang des Schweißarms 2, 3 angeordnete Schweißleisten 4 auf, die bei einer geschlossenen Schweißstation 1 zum Halten und Verschweißen von gefüllten Folienbeuteln dienen. Die Folienbeutel werden in einem gefüllten, noch offenen Zustand der Schweißstation 1 mit einer Folienbeuteltransportvorrichtung (nicht dargestellt) zugeführt, in der sich die Folienbeutel in einer solchen Ausrichtung relativ zu der Schweißstation 1 befinden, dass bei einem Schließen der Schweißarme 2, 3 die Folienbeutel in einem oberen Bereich zwischen den jeweiligen Schweißleisten 4 gehalten und dann auch verschweißt werden können.

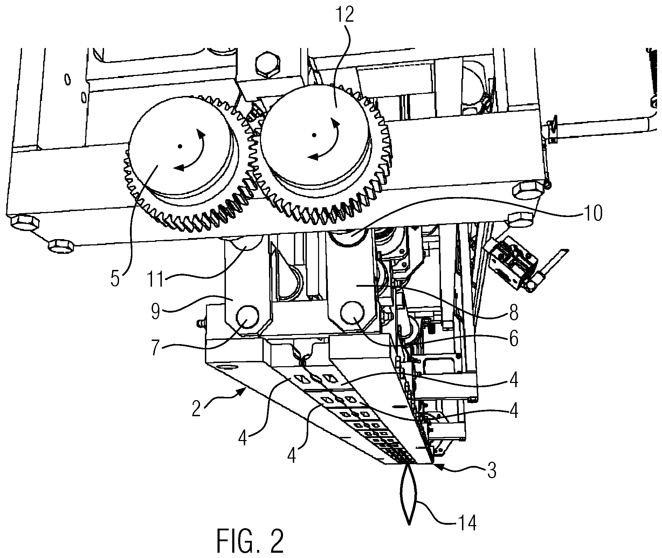

Das Öffnen bzw. Schließen der Schweißarme 2, 3 erfolgt mittels des Servomotors 13, der direkt an einer ersten Antriebswelle 10 (hier nicht sichtbar; siehe Figur 2) angeordnet ist. Durch diese Anordnung ist eine direkte Einwirkung des Servomotors 13 auf die erste Antriebswelle 10 möglich, wodurch die Bewegung der beiden Schweißarme 2, 3 besser gesteuert werden kann und eine Genauigkeit in der Positionierung der Schweißarme 2, 3 gewährleistet wird. Dadurch können Verschleißerscheinungen der Schweißarme 2, 3 und Beschädigungen im zu verschweißenden Bereich der Folienbeutel minimiert werden, da beispielsweise der Anpressdruck der beiden Schweißarme 2, 3 an Typen der Folienbeutel und/oder den Zeitpunkt während des Schweißprozesses anpassbar ist.

Der erste Schweißarm 2 ist durch die erste Antriebswelle 10 bewegbar, an deren einem Ende der Servomotor 13 und an deren anderem Ende ein erstes Zahnrad 5 (hier nicht sichtbar; siehe Figur 2) angeordnet ist. Der erste Schweißarm 2 weist zwei Achsen 6, 7 auf (hier nicht sichtbar; siehe Figur 2), wobei die erste Achse 6 mittels eines ersten Gestänges 8 mit der ersten Antriebswelle 10 und die zweite Achse 7 mittels eines zweiten Gestänges 9 mit einer dritten, zu der ersten Antriebswelle 10 parallelen Achse 11 verbunden sind.

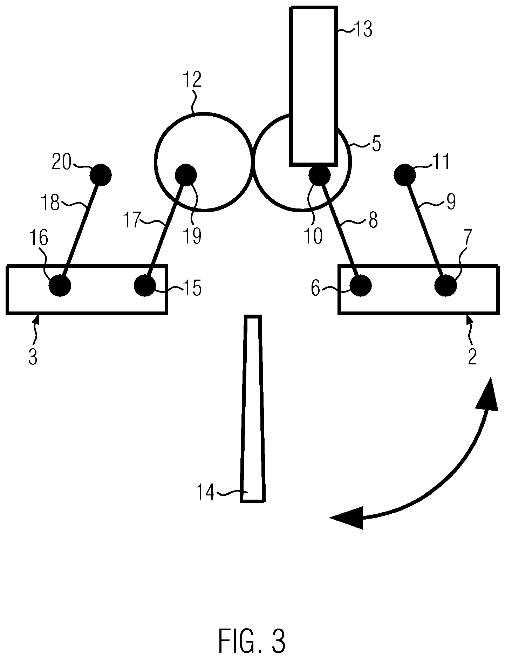

Der zweite Schweißarm 3 weist ebenfalls zwei Achsen 15, 16 auf (hier nicht sichtbar; siehe Figur 3), wobei die erste Achse 15 mittels eines ersten Gestänges 17 mit der zweiten Antriebswelle 19 und somit mit einem zweiten Zahnrad 12 (hier nicht sichtbar; siehe Figur 2) und die zweite Achse 16 mittels eines zweiten Gestänges 18 mit einer dritten, zu der zweiten Antriebswelle 19 parallelen Achse 20 verbunden sind (hier nicht dargestellt; siehe Figur 3).

Figur 2 zeigt eine perspektivische Ansicht der geschlossenen Schweißstation 1 in einer zweiten Blickrichtung von schräg unterhalb der Schweißstation 1, so dass die Seite der Schweißstation 1 mit den beiden Zahnrädern 5, 12 zu sehen ist. Die beiden Schweißarme 2, 3 wurden aufeinander zubewegt und die Schweißstation 1 geschlossen, so dass die Schweißleisten 4 nun in Kontakt bzw. zwischen den Schweißleisten 4 die oberen Bereiche der zu verschweißenden Folienbeutel eingeklemmt sind bzw. davon gehalten werden. Zwischen den beiden Schweißarmen 2, 3 besteht ein Anpressdruck, dessen Stärke durch den Servomotor 13 steuerbar ist.

Die Schließbewegung der beiden Schweißarme wurde durch den Zahnradantrieb mit den ineinandergreifenden ersten 5 und zweiten Zahnrädern 12 ausgeführt, wobei die Bewegung des ersten Zahnrads 5 an das zweite Zahnrad 12 übertragen wurde. Somit erfolgte eine synchrone Bewegung des ersten 2 und des zweiten 3 Schweißarms während des Schließens ausgehend von dem an der ersten Antriebsachse 10 angeordneten Servomotor 13. Exemplarisch ist ein gefüllter Folienbeutel 14 gezeigt, der zwischen zwei Schweißleisten 4 der Schweißarme 2, 3 gehalten wird bzw. eingeklemmt ist.

Während des Schweißprozesses kann der Anpressdruck der beiden Schweißarme 2, 3 mittels des Servomotors 13 erhöht werden, beispielsweise durch eine Überwachung und Regelung der Stromaufnahme des Servomotors 13; der Anpressdruck kann aber auch gleich bleiben oder verkleinert werden. Durch das Nachregeln des Anpressdrucks der beiden Schweißarme 2, 3 mittels des direkt an der Antriebswelle 10 angebrachten Servomotors 13, nachdem der Schweißprozess begonnen hat, kann dafür gesorgt werden, dass die beiden Folienbeutelhälften auch bei einer eventuellen Materialdickenabnahme im Bereich der Schweißstelle weiter aneinander liegen.

Nach dem Verschweißen und einem Öffnen der Schweißarme 2, 3 können die verschweißten Folienbeutel 14 mittels der Folienbeuteltransportvorrichtung weiteren Prozessen zugeführt werden.

Figur 3 zeigt ein Detail zur Bewegung der beiden Schweißarme 2, 3. In dieser schematischen Seitenansicht sind der erste 2 und der zweite Schweißarm 3 sowie das erste 5 und das zweite Zahnrad 12 zu sehen. Der erste Schweißarm 2 ist durch die erste Antriebswelle 10 bewegbar, an deren einem Ende der Servomotor 13 und an deren anderem Ende das erste Zahnrad 5 angeordnet ist. Der erste Schweißarm 2 weist zudem Achsen 6, 7 auf, wobei die erste Achse 6 mittels eines Gestänges 8 mit der ersten Antriebswelle 10 und die zweite Achse 7 mittels eines Gestänges 9 mit einer dritten, zu der ersten Antriebswelle 10 parallelen Achse 11 verbunden sind.

Der zweite Schweißarm 3 weist ebenfalls zwei Achsen 15, 16 auf, wobei die erste Achse 15 mittels eines Gestänges 17 mit der zweiten Antriebswelle 19 und die zweite Achse 16 mittels eines Gestänges 18 mit einer dritten, zu der zweiten Antriebswelle 19 parallelen Achse 20 verbunden sind.

Durch diesen Zahnradantrieb mit den zwei ineinandergreifenden Zahnrädern 5, 12 wird die Bewegung des ersten Zahnrads 5 an das zweite Zahnrad 12 und somit eine Antriebsbewegung der ersten Antriebswelle 10, an der der Servomotor 13 angeordnet ist, an die zweite Antriebswelle 19 übertragen. Somit erfolgt immer eine synchrone Bewegung des ersten 2 und des zweiten 3 Schweißarms während des Öffnens bzw. Schließens der Schweißstation 1. Aufgrund der dargestellten Anordnung der beiden Schweißarme 2, 3 ist es somit möglich, eine rotativ-parallele Bewegung auszuführen, wodurch die gewünschte präzise Ausführung der Bewegung und eine Steuerung des Anpressdrucks der beiden Schweißarme 2, 3 gewährleistet werden können.

## Patentansprüche

1. Schweißstation (1) in einer Folienbeutelabfüllvorrichtung zum Verschweißen von Folienbeuteln (14) nach einem Füllprozess, wobei die Schweißstation (1) einen ersten Schweißarm (2) und einen zweiten Schweißarm (3) zum Verschweißen mehrerer gefüllter, nebeneinander angeordneter Folienbeutel (14) umfasst, wobei der erste Schweißarm (2) und der zweite Schweißarm (3) spiegelsymmetrisch sind, wobei der erste Schweißarm (2) mit einer ersten Antriebswelle (10) und der zweite Schweißarm (3) mit einer zweiten Antriebswelle (19) bewegbar sind, und wobei die Schweißstation (1) einen Servomotor (13) umfasst, der an der ersten Antriebswelle (10) angeordnet ist und wobei eine Antriebsbewegung der ersten Antriebswelle (10) von einem ersten Zahnrad (5) an ein in das erste Zahnrad (5) greifendes zweites Zahnrad (12) und von dem zweiten Zahnrad (12) an die zweite Antriebswelle (19) übertragen wird,
**dadurch gekennzeichnet, dass**
die Schweißarme (2, 3) jeweils mehrere, nebeneinander entlang der Schweißarme (2, 3) angeordnete Schweißleisten (4) umfassen.

2. Schweißstation nach Anspruch 1, wobei die Schweißleisten (4) zum Ultraschallschweißen ausgelegt sind.

3. Schweißstation nach Anspruch 1 oder 2, wobei die Schweißarme (2, 3) dazu ausgelegt sind, in einem geschlossenen Zustand einen Anpressdruck auszuüben.

4. Schweißstation nach einem der Ansprüche 1 bis 3, die weiter eine Mess- und Steuervorrichtung für einen Strom des Servomotors (13) umfasst.

5. Schweißstation nach Anspruch 4, soweit rückbezogen auf Anspruch 3, wobei die Mess- und Steuervorrichtung dazu ausgelegt ist, den Anpressdruck basierend auf Typangaben der Folienbeutel (14) mittels des Stroms des Servomotors (13) zu steuern.

6. Schweißstation nach einem der Ansprüche 1 bis 5, die weiter eine Folienbeuteltransportvorrichtung umfasst.

7. Verfahren zum Verschweißen von Folienbeuteln (14) nach einem Füllprozess mit der Schweißstation (1) nach einem der Ansprüche 1 bis 6 mit den Schritten:
- Positionieren der gefüllten Folienbeutel (14) unterhalb der Schweißstation (1),
- Schließen der Schweißarme (2, 3) und Ausüben eines Anpressdrucks mit einem ersten Wert und
- Verschweißen der gefüllten Folienbeutel (14).

8. Verfahren nach Anspruch 7, wobei während des Verschweißens der Anpressdruck auf einen zweiten Wert erhöht wird.

9. Verfahren nach Anspruch 7 oder 8, das nach dem Schritt des Verschweißens ein Öffnen der Schweißarme (2, 3) umfasst.

10. Verfahren nach Anspruch 9, bei dem anschließend ein Entfernen der verschweißten Folienbeutel (14) erfolgt.

11. Verfahren nach einem der Ansprüche 7 bis 10 mit den weiteren Schritten:
- Eingeben von Typangaben der Folienbeutel (14) und/oder Auslesen von Typangaben der Folienbeutel (14) aus einem Datenspeicher,
- Berechnen eines Sollstroms des Servomotors (13) basierend auf den Typangaben mittels einer Mess- und Steuervorrichtung,
- Steuern des Servomotors (13) entsprechend des berechneten Sollstroms.

## Claims

1. Sealing station (1) in a film bag filling device for sealing film bags (14) after a filling process,, wherein the sealing station (1) comprises a first sealing arm (2) and a second sealing arm (3) for sealing of several filled film bags (14) being arranged side by side, wherein the first sealing arm (2) and the second sealing arm (3) are mirror-symmetric, wherein the first sealing arm (2) is moveable with a first drive shaft (10) and the second sealing arm (3) with a second drive shaft (19) and wherein the sealing station (1) comprises a servo engine (13) being disposed on the first drive shaft (10), and wherein a drive movement of the first drive shaft (10) is transferred from a first gear wheel (5) to a second gear wheel (12) that encroaches in the first gear wheel (5) and from the second gearwheel (12) to the second drive shaft (19),
**characterised in that**
the sealing arms (2, 3) each comprise several sealing bars (4) being arranged side by side along the sealing arms (2, 3).

2. Sealing station according to claim 1, wherein the sealing bars (4) are designed for ultrasound sealing.

3. Sealing station according to claim 1 or 2, wherein the sealing arms (2, 3) are designed to apply a contact pressure in a closed state.

4. Sealing station according to one of claims 1 to 3 that further comprises a measurement and control unit for a current of the servo engine (13).

5. Sealing station according to claim 4, as relating back to claim 3, wherein the measurement and control device is designed to control the contact pressure based on type information of the film bags (14) by means of the current of the servo engine (13).

6. Sealing station according to one of claims 1 to 5 that further comprises a film bag transport device.

7. Method for sealing film bags (14) after a filling process with the sealing station (1) according to one of claims 1 to 6 with the steps:
- positioning the filled film bags (14) below the sealing station (1),
- closing the sealing arms (2, 3) and applying a contact pressure with a first value and
- sealing the filled film bags (14).

8. Method according to claim 7, wherein the contact pressure is increased to a second value during the sealing.

9. Method according to claim 7 or 8 that comprises opening the sealing arms (2, 3) after the sealing step.

10. Method according to claim 9 in which a removing of the sealed film bags (14) takes place afterwards.

11. Method according to one of claims 7 to 10 with the further steps:
- entering type information of the film bags (14) and/or reading out type information of the film bags (14) from a data memory,
- calculating a nominal current of the servo engine (13) based on the type information by means of a measurement and control device,
- controlling the servo engine (13) in accordance with the calculated nominal current.

## Revendications

1. Station de scellage (1) dans un dispositif de remplissage de sachets en film pour sceller des sachets en film (14) après un processus de remplissage, la station de scellage (1) comprenant un premier bras de scellage (2) et un deuxième bras de scellage (3) pour sceller une pluralité de sachets en film remplis (14) disposés les uns à côté des autres, le premier bras de scellage (2) et le deuxième bras de scellage (3) étant symétriques en miroir, dans lequel le premier bras de soudage (2) est mobile avec un premier arbre d'entraînement (10) et le deuxième bras de soudage (3) est mobile avec un deuxième arbre d'entraînement (19), et dans lequel le poste de soudage (1) comprend un servomoteur (13) disposé sur le premier arbre d'entraînement (10) et dans lequel un mouvement d'entraînement du premier arbre d'entraînement (10) est transmis d'une première roue dentée (5) à une deuxième roue dentée (12) s'engageant dans la première roue dentée (5) et de la deuxième roue dentée (12) au deuxième arbre d'entraînement (19),
**caractérisé en ce que**
les bras de soudure (2, 3) comprennent chacun plusieurs barres de soudure (4) disposées côte à côte le long des bras de soudure (2, 3).

2. Station de soudage selon la revendication 1, dans laquelle les barres de soudage (4) sont conçues pour le soudage par ultrasons.

3. Station de soudage selon les revendications 1 ou 2, dans laquelle les bras de soudage (2, 3) sont conçus pour exercer une pression de contact dans un état fermé.

4. Station de soudage selon l'une des revendications 1 à 3, comprenant en outre un dispositif de mesure et de contrôle du courant du servomoteur (13).

5. Station de soudage selon la revendication 4, dans la mesure où elle est visée par la revendication 3, dans laquelle le dispositif de mesure et de contrôle est adapté pour contrôler la pression de contact sur la base des spécifications de type des sachets en film (14) au moyen du courant du servomoteur (13).

6. Station de soudage selon l'une des revendications 1 à 5, comprenant en outre un dispositif de transport de sachets en film.

7. Procédé de scellage de sachets en feuille (14) après un processus de remplissage avec la station de scellage (1) selon l'une des revendications 1 à 6, comprenant les étapes suivantes:
- placer les sachets de film remplis (14) sous la station de soudage (1),
- fermer les bras de soudure (2, 3) et exercer une pression de contact avec une première valeur et
- fermer les sachets en aluminium remplis (14).

8. Procédé selon la revendication 7, dans laquelle, pendant le scellement, la pression de contact est augmentée à une deuxième valeur.

9. Procédé selon la revendication 7 ou 8, qui consiste à ouvrir les bras de scellage (2, 3) après l'étape de scellage.

10. Procédé selon la revendication 9, qui consiste à retirer ensuite les sachets de film scellés (14).

11. Procédé selon l'une quelconque des revendications 7 à 10 comprenant les étapes suivantes:
- saisir les données relatives au type de sachet en aluminium (14) et/ou lecture des données relatives au type de sachet en aluminium (14) dans une mémoire de données,
- calculer un courant cible du servomoteur (13) sur la base des données du type au moyen d'un dispositif de mesure et de contrôle,
- contrôler le servomoteur (13) en fonction du courant de consigne calculé.
